# EUROPÄISCHE PATENTSCHRIFT

(11) **EP 0 615 326 B1**
(45) Veröffentlichungstag und Bekanntmachung des Hinweises auf die Patenterteilung: **02.05.1997**
(21) Anmeldenummer: 94100546.4
(22) Anmeldetag: 15.01.1994
(51) Int. Cl.: H02G 3/12

(54) **Geräteeinbaudose für Kabelkanäle**
Flush mounted box for cable conduits
Boîte d'encastrement pour canalisations de cables

(30) Priorität: 09.03.1993 DE 9303404 U
(43) Veröffentlichungstag der Anmeldung: 14.09.1994
(73) Patentinhaber: REHAU AG + Co, 95111 Rehau (DE)
(72) Erfinder: Zielke, Peter, D-95111 Rehau (DE); Peetz, Matthias, D-95111 Rehau (DE)

(56) Entgegenhaltungen:
- DE-U- 9 214 202

## Beschreibung

Die Erfindung betrifft eine Geräteeinbaudose mit Befestigungselementen zur Festlegung an Bodenbereichen von Kabelkanälen, wobei am Boden des Kabelkanals längsverlaufende, U-förmige Aufrasthalter mit in entgegengesetzter Richtung nach außen abragenden Rastschenkeln angeordnet sind, welche an der Geräteeinbaudose angeordnete Rastelemente halternd hintergreifen, wobei einerseits zwei einstückig an den Unterboden der Geräteeinbaudose angeformte Rastelemente mit Rasthaken vorhanden sind, welche parallel zur Mittelachse der Geräteeinbaudose nach außen versetzt randnah vom Unterboden abragen, und wobei andererseits das gegenüberliegende Rastelement in entsprechender, entgegengesetzter, achsparalleler Versetzung im Mittelbereich zwischen den beiden Rastelementen als beweglicher Rastverschluß ausgebildet ist.

Eine gattungsgemäße Geräteeinbaudose ist aus dem DE-U 92 14 202 bekannt. Der dort beschriebene, drehbewegliche Knebelverschluß kann beim Aufeinandertreffen verschiedener Toleranzen der aneinander festzulegenden Bauteile zu Schwierigkeiten bei der Befestigung über die Dreh-/Schwenkbewegung führen.

Aus der DE-C 31 12 347 ist eine Einbaudose für elektrische Installationsgeräte bekannt, welche in Führungsnuten der Seitenwandungen der Einbaudose in deren Längsrichtung bewegbare Halter aufweist. Diese Halter sind als Klammerschieber ausgebildet, welche die Aufrastschenkel der Aufrasthalter hintergreifen und über Befestigungsschrauben mit den Rastschenkeln verspannbar sind. Der Nachteil dieser Art der Festlegung von Einbaudosen liegt in einem beträchtlichen Montageaufwand. Hier müssen zunächst die Klammerschieber in die nutenförmigen öffnungen der Seitenwände eingesetzt und dann von oben mit den Befestigungsschrauben festgelegt werden.

Aus dem DE-U 76 11 901 ist ein Kabelkanal mit einem Unterteil und einem lösbar damit verbindbaren Deckelteil bekannt, an dessen Innenwandungen eine Geräteeinbaudose mittels einer Befestigungsvorrichtung festlegbar ist. Zu dieser Befestigung dienen Haltestücke, die im wesentlichen aus einer Kreisscheibe bestehen, welche in eine öffnung in der Geräteeinbaudose einführbar sind. Die kreisförmigen Haltestücke besitzen einen rechteckförmigen Ansatz, der mit einer Befestigungsbohrung versehen ist. Diese Haltestücke arbeiten mit Befestigungselementen im Deckelteil des Kabelkanals zusammen. Nach Einführung des Haltestücks in die Bodenöffnung der Geräteeinbaudose wird das Haltestück durch Drehen um 90° in seine Verbindungslage gebracht. Dabei verschwenken in einem Ansatz des Haltestücks angeordnete Befestigungsbohrungen in den Eckbereich der Geräteeinbaudose. Dieser Eckbereich weist eine Öffnung auf, durch die eine Befestigungsschraube in die verschwenkten Befestigungsbohrungen des Ansatzes eingesetzt werden kann. Auf diese Weise wird die Geräteeinbaudose am Deckel des Kabelkanals festgelegt.

Auch bei dieser Befestigungsart ist der besonders hohe Montageaufwand als Nachteil zu werten. Es muß zunächst die Öffnung in der Seitenwand der Geräteeinbaudose durch Ausbrechen der Kabeleinführungsöffnungen in den Seitenwänden hergestellt werden. In die dadurch gebildeten Taschen werden die Haltestücke von der Rückseite des Bodens der Geräteeinbaudose her eingeschoben. Danach müssen die Haltestücke in ihrer Einschublage so weit verschwenkt werden, daß die Ansätze mit den Befestigungsbohrungen unter die Eckbereiche der Geräteeinbaudose gelangen. Dann muß schließlich die Verbindung zwischen dem Deckelteil und der Geräteeinbaudose durch Verschrauben hergestellt werden.

Hier setzt die Erfindung ein, die es sich zur Aufgabe gestellt hat, die besonders montageintensiven Befestigungsarten von Geräteeinbaudosen in Kabelkanälen so zu verbessern, daß die Montage durch einfache Handgriffe erfolgen kann und in der Lage ist, alle auftretenden Toleranzfälle bei der Verbindung von Geräteeinbaudosen mit Halterungen in Kabelkanälen aufzufangen. Erfindungsgemäß wird dazu vorgeschlagen, daß der bewegliche Rastverschluß zweiteilig aus einem Exzenterbolzen und einem mit einer Eingriffsöffnung für den Exzenterstift versehenen Schiebekeil aufgebaut ist. Durch diese Maßnahme wird die bei der bekannten Version erforderliche Drehbewegung des Rastelementes in eine lineare Schiebebewegung transformiert, wodurch die Überbrückung auftretender Toleranzen ohne Schwierigkeiten erfolgen kann, da hier ein keilförmiges Element unter die zugeordneten Rastschenkel des Kabelkanals geführt wird.

Die Eingriffsöffnung für den Exzenterstift ist dabei vorteilhaft im Querschnitt des Schiebekeils als Langloch quer zur Verschieberichtung eingelassen. Zweckmäßig ist dabei an wenigstens einer seitlichen Begrenzungswand des Langlochs eine Rasterhebung ausgeformt, die der Exzenterstift bei seiner exzentrischen Bewegung schnappend überfährt und die als Rastsperre dient. Schließlich weist der Schiebekeil noch über seine gesamte Breite eine zum Rastschenkel gerichtete Anlaufschräge auf, wodurch die rastende Übergreifung des Rastschenkels erleichtert wird.

Die Vorteile der Erfindung zur Festlegung einer Geräteeinbaudose an Bodenbereichen von Kabelkanälen werden gegenüber dem bekannten Stand der Technik darin gesehen, daß die zwei feststehenden Rastelemente und der bewegliche Rastverschluß räumlich so angeordnet sind, daß im Verrasterungszustand eine Drei-Punkt-Auflage entsteht. Diese Art der Befestigung bietet einen Festsitz der Geräteeinbaudose im Kabelkanal bei optimalem Toleranzausgleich. Darüber hinaus ist der Rastverschluß vorteilhaft durch die beschriebenen Rastsperren gegen selbständiges Lösen gesichert.

In der Zeichnung ist ein Ausführungsbeispiel der Erfindung schematisch dargestellt; es zeigt:
Fig. 1 eine Draufsicht auf den Unterboden der Geräteeinbaudose mit den Verrasterungselementen,
Fig. 2 einen Schnitt durch die Verrasterungselemente mit Exzenterraste,
Fig. 3 einen Schnitt durch den Exzenterbolzen längs der Linie A-A aus Fig. 2,
Fig. 4 eine Draufsicht auf den Schiebekeil der Exzenterraste.

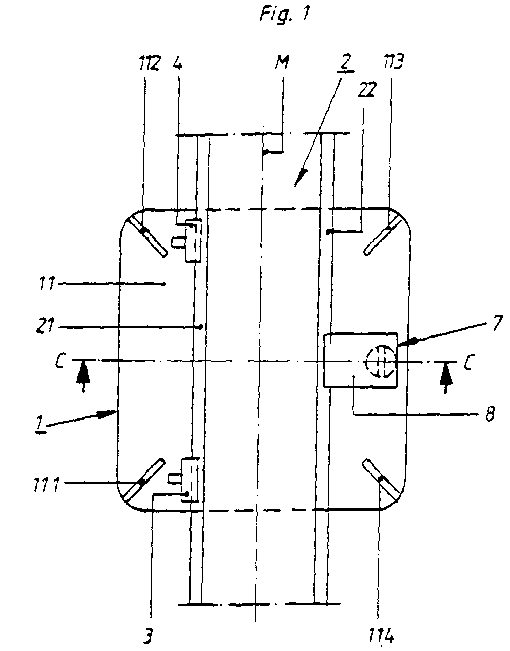

In Fig. 1 ist die Geräteeinbaudose 1 mit ihrem Rastsitz auf dem U-förmigen Aufrasthalter 2 dargestellt.

Der U-förmige Aufrasthalter 2 kann dabei eine Normschiene sein. Die feststehenden Rastelemente 3, 4 hintergreifen den außen abragenden Rastschenkel 21 und legen die Einbaudose 1 in diesem Bereich fest. Gegenüberliegend ist der im Mittelbereich zwischen den beiden Rastelementen 3, 4 ebenfalls randnah angeordnete bewegliche Rastverschluß (Exzenterbolzen 7) im Rastzustand gezeigt. Der Rastverschluß (Exzenterbolzen 7) ist dabei in eine Stellung gebracht, in der der verschieblich am Exzenterbolzen 7 festgelegte Schiebekeil 8 rastend unter den Rastschenkel 22 des U-förmigen Aufrasthalters 2 gebracht ist. An den vier Eckbereichen des Unterbodens 11 der Einbaudose 1 sind senkrecht abragende Stützfüße (111, 112, 113, 114) zu erkennen.

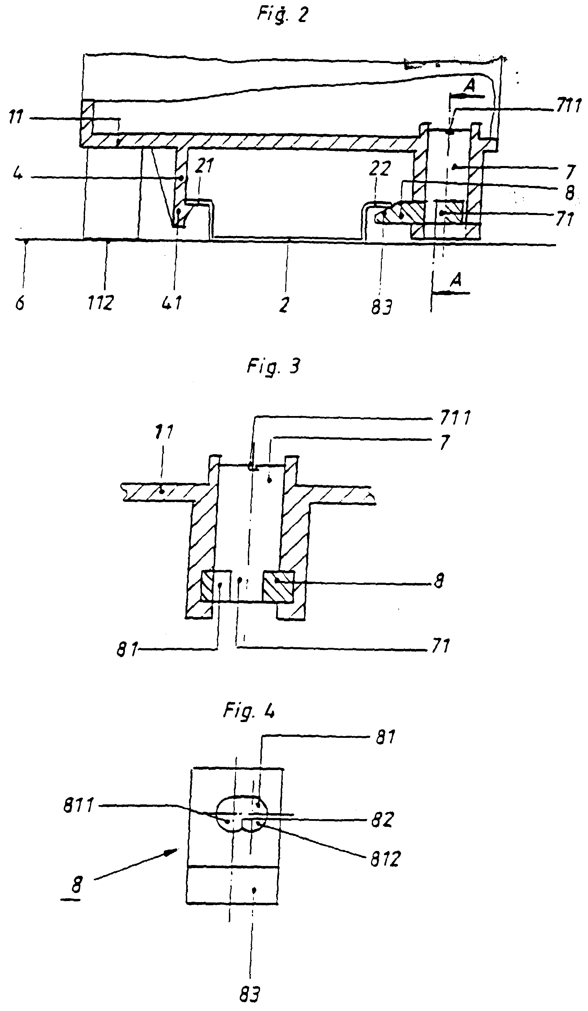

Fig. 2 zeigt einen Stufenschnitt längs der Linie aus C-C durch die Rastelemente 4, 7, 8 gemäß Fig. 1. Es ist deutlich zu erkennen, wie das Rastelement 4 mit seinem Rasthaken 41 den Rastschenkel 21 des U-förmigen Aufrasthalters 2 untergreift. Der U-förmige Aufrasthalter 2 ist hierbei auf den Bodenbereich 6 des sonst nicht dargestellten Kabelkanals aufgesetzt.

Die Exzenterraste besteht aus dem Exzenterbolzen 7 mit dem angeformten Exzenterstift 71, welcher in die Eingriffsöffnung 81 des Schiebekeils 8 eingreift. Der Schiebekeil 8 weist die über seine gesamte Breite zum Rastschenkel 22 hin verlaufende Anlaufschräge 83 auf, mit der der Rastschenkel 22 in der gezeigten Darstellung halternd untergriffen ist. Im oberen Abschlußbereich des Exzenterbolzens 7 ist die schlitzartige Eingriffsöffnung 711 für das Drehwerkzeug (nicht dargestellt) eingelassen.

Fig. 3 zeigt den Schnitt durch den Exzenterbolzen 7 längs der Stufenlinie A-A in Fig. 2 in seinem drehbaren Sitz am Unterboden 11 der Geräteeinbaudose 1. Der Exzenterstift 71 ist in der gezeigten Darstellung in der Eingriffsöffnung 81 über der Mittelachse des Schiebekeils 8 positioniert.

Fig. 4 zeigt schließlich eine Draufsicht auf den Schiebekeil 8 mit der Eingriffsöffnung 81. Zu erkennen ist die Rasterhebung 82 in der unteren seitlichen Begrenzungswand des Langlochs (Eingriffsöffnung 81), die der Exzenterstift 71 bei der Drehbewegung des Exzenterbolzens 7 überwinden muß, um von der Raststellung (Fig. 3) in die Öffnungsstellung zu gelangen. Durch die Rasterhebung 82 ist die Eingriffsöffnung 81 in zwei Aufnahmeabschnitte 811, 812 für den Exzenterstift 71 unterteilt, die praktisch den Verschiebeweg des Schiebekeils 8 und die Drehbewegung des Exzenterbolzens 7 bei der Auf-Zu-Bewegung begrenzen. Da der Exzenterbolzen 7 bei der in Fig. 2-4 gezeigten Ausführungsart nahezu vollständig in den Unterboden 11 der Geräteeinbaudose 1 abgesenkt ist, ergibt sich durch diese Lösung keine Beeinträchtigung des lichten Aufnahmeraumes der Geräteeinbaudose 1, der damit in vollem Umfang für den Einbau elektrischer Geräte zur Verfügung steht.

## Patentansprüche

1. Geräteeinbaudose (1) mit Befestigungselementen zur Festlegung an Bodenbereiche (6) von Kabelkanälen, wobei am Boden des Kabelkanals längsverlaufende, U-förmige Aufrasthalter (2) mit in entgegengesetzter Richtung nach außen abragenden Rastschenkeln (21, 22) angeordnet sind, welche an der Geräteeinbaudose (1) angeordnete Rastelemente (3, 4, 8) halternd hintergreifen, wobei einerseits zwei einstückig an den Unterboden (11) der Geräteeinbaudose (1) angeformte Rastelemente (3, 4) mit Rasthaken (31, 41) vorhanden sind, welche parallel zur Mittelachse (M) der Geräteeinbaudose (1) nach außen versetzt randnah vom Unterboden (11) abragen, und wobei andererseits das gegenüberliegende Rastelement (8) in entsprechender, entgegengesetzter, achsparalleler Versetzung im Mittelbereich zwischen den beiden Rastelementen (3, 4) als beweglicher Rastverschluß ausgebildet ist, dadurch gekennzeichnet, daß der bewegliche Rastverschluß zweiteilig aus einem Exzenterbolzen (7) und einem mit einer Eingriffsöffnung (81) für den Exzenterstift (71) versehenen Schiebekeil (8) aufgebaut ist.

2. Geräteeinbaudose nach Anspruch 1, dadurch gekennzeichnet, daß die Eingriffsöffnung (81) für den Exzenterstift (71) als Langloch quer zur Verschieberichtung in die Fläche des Schiebekeils (8) eingelassen ist.

3. Geräteeinbaudose nach Anspruch 2, dadurch gekennzeichnet, daß an wenigstens einer seitlichen Begrenzungswand der Eingriffsöffnung (81) eine Rasterhebung (82) ausgeformt ist.

4. Geräteeinbaudose nach Anspruch 1, dadurch gekennzeichnet, daß der Schiebekeil (8) über seine gesamte Breite eine zum Rastschenkel (22) gerichtete Anlaufschräge (83) aufweist.

## Claims

1. Socket outlet box (1) with fixing elements to attach to base area (6) of cable trunking, whereby U-shaped snap-on holders (2), running down the length of the cable trunking, with snap-in legs (21, 22) pointing outwards in the opposite direction, positioned on the base of the cable trunking, snap in and attach on to snap-in elements (3, 4, 8) positioned on the socket outlet box (1), whereby, on one side, two single-piece, moulded, snap-in elements (3, 4) on the underside (11) of the socket outlet box (1) have catches (31, 41), which protrude outwards parallel to the central axis (M) of the socket outlet box close to the edge of the underside (11), and whereby on the other side, the opposite snap-in elements (8) is designed as a moveable snap-in lock, in the relevant, opposite position parallel to the axis, half-way between the two snap-in elements (3, 4), characterised in that the movable snap-in lock is made up, in two parts, of an eccentric bolt (7) and a spline (8) with a contact opening (81) for the eccentric pin (71).

2. Socket outlet box in accordance with Claim 1, characterised in that the contact opening (81) for the eccentric pin (71) is set as a slot transversally to the shifting direction into the surface of the spline (8).

3. Socket outlet box in accordance with Claim 2, characterised in that there is an elevated notch (82) moulded on at least one of the side limiting walls of the contact opening (81).

4. Socket outlet box in accordance with Claim 2, characterised in that the spline (8) has a chamfer (83), angled to the snap-in leg (22), over its whole surface.

## Revendications

1. Boîtier d'appareillage (1) comportant des éléments de montage pour fixation en fond de goulottes électriques (6), dont ce fond est muni d'éléments longitudinaux (2) en forme de U, lesquels sont complétés par des moyens d'accrochage (21, 22) orientés vers l'extérieur et perpendiculairement à cette forme, lesquels s'accrochent sur les éléments de fixation respectifs (3, 4, 8) du boîtier d'appareillage (1), dont d'un côté 2 de ces éléments (3, 4) de forme spécifique, situés sous la partie (11) du boîtier d'appareillage (1) et orientés extérieurement à la nervure solidaire du fond de boîtier (11), et dont l'élément de clippage (8) est placé perpendiculairement et au centre sur l'axe formé par les harpons (3, 4) constituant aussi un élément de verrouillage, caractérisé par sa constitution en deux pièces, qui sont d'une part un boulon excentrique (7) et d'autre part une came coulissante (8), munie d'une ouverture (81) pour le passage de la tige (71) de l'excentrique.

2. Boîtier de montage (1), selon les revendications 1, caractérisé en ce que l'ouverture (81) permettant le passage de la tige (71) de l'excentrique est un trou oblong, transversal au sens de déplacement de la came.

3. Boîtier de montage (1), selon les revendications 2, caractérisé en ce que les limites du contour formant l'ouverture (81) sont munies d'une surépaisseur (82).

4. Boîtier de montage (1), selon les revendications 2, caractérisé en ce que la came coulissante (8) présente sur toute sa largeur un chanfrein (83) prévu pour l'accrochage sur les nervures (22).
